# FASCICULE DE BREVET EUROPEEN

(11) **EP 0 967 825 B1**
(45) Date de publication et mention de la délivrance du brevet: **04.06.2008**
(21) Numéro de dépôt: 99201881.2
(22) Date de dépôt: 14.06.1999
(51) Int. Cl.: H04Q 11/04

(54) **Méthode de ré-attribution d'identifacateur de connexion dans un réseau fonctionnant en mode connecté**
Verfahren zur Wiederzuweisung der Verbindungserkennung in einem Verbindugsorientierten Netz
Method for reassigning the connection identifier in a connection oriented network

(30) Priorité: 23.06.1998 FR 9807917
(43) Date de publication de la demande: 29.12.1999
(73) Titulaire: Koninklijke Philips Electronics N.V., 5621 BA Eindhoven (NL)
(72) Inventeur: Alimi, Raphael, 75008 Paris (FR); Teboul, Guillène, 75008 Paris (FR); Damien, Souad, 75008 Paris (FR)
(74) Mandataire: van Oudheusden-Perset, Laure E.

(56) Documents cités:
- US-A- 5 339 318
- US-A- 5 483 525
- DONNELLY A ET AL: "A TUTORIAL ON THE DIGITAL AUDIO-VISUAL COUNCIL (DAVIC) STANDARDISATION ACTIVITY" ELECTRONICS AND COMMUNICATION ENGINEERING JOURNAL, vol. 9, no. 1, février 1997 (1997-02), pages 46-56, XP000722910

## Description

L'invention concerne un réseau de communication en mode connexion, qui comporte au moins un équipement de réseau et des stations d'usagers, ledit équipement de réseau étant doté de moyens d'attribution, à une station d'usager, d'au moins un identificateur de connexion, en réponse à une demande de connexion de ladite station d'usager.

L'invention concerne également un équipement de réseau destiné à être utilisé dans un tel réseau et un procédé d'attribution d'identificateur de connexion destiné à être utilisé dans un tel équipement de réseau.

L'invention a d'importantes applications notamment dans le domaine des réseaux câblés de télédistribution, par exemple dans les réseaux conformes aux normes DAVIC ou IEEE802.14.

Le brevet américain n° 5,483,525 décrit un réseau de communication ATM (de l'anglais Asynchronous Transfert Mode) qui comporte au moins une unité du réseau chargée d'attribuer des identificateurs VPI / VCI (de l'anglais Virtual Path Identifier et Virtual Channel Identifier) à chaque utilisateur qui demande l'établissement d'une connexion. Les identificateurs attribués sont choisis parmi une liste d'identificateurs disponibles.

Un problème qui se pose est que le nombre d'identificateurs susceptibles d'être attribués est limité. Lorsque plus aucun identificateur n'est disponible, il n'est plus possible d'établir de connexion.

Le brevet américain n° 5,339,318 décrit un système d'attribution d'identificateurs VPI /VCI dans un réseau de communication ATM. Une unité de gestion attribue des identificateurs VPI / VCI à des appels et gère l'information concernant les identificateurs VPI / VCI attribués aux appels et des identificateurs VPI / VCI inactifs. Chaque noeud du réseau est muni d'une unité d'annulation d'attribution qui demande à l'unité de gestion d'annuler les identificateurs VPI / VCI attribués à un appel en réponse à une fin de communication relative à cet appel.

Lorsqu'une station a été déconnectée au profit d'une autre station, ce qui implique la réattribution d'un identificateur, le problème qui se pose est le suivant: une tête de réseau peut recevoir en provenance d'autres stations du réseau des cellules qui portent l'identificateur réattribué et qui sont destinées soit à l'une soit l'autre station. L'invention a notamment pour but de résoudre ce problème.

La revendication 1 définit un équipement pour un réseau de communication en mode connexion selon l'invention. La revendication 3 définit un procédé de gestion des connexions dans un tel réseau selon l'invention.

L'invention tire partie du fait que statistiquement, dans le cas d'un réseau de télévision câblé, seules 30% des stations d'usager qui sont connectées au réseau transmettent simultanément des données.

L'invention sera mieux comprise et d'autres détails apparaîtront dans la description qui va suivre en regard des dessins annexés qui sont donnés à titre d'exemple non limitatif et dans lesquels:
- la figure 1 représente un exemple de réseau selon l'invention,
- la figure 2 représente un exemple procédé d'attribution d'identificateur de connexion selon l'invention,
- la figure 3 est un exemple de procédé de gestion des connexions par la tête de réseau,
- la figure 4 est une représentation d'une cellule ATM.

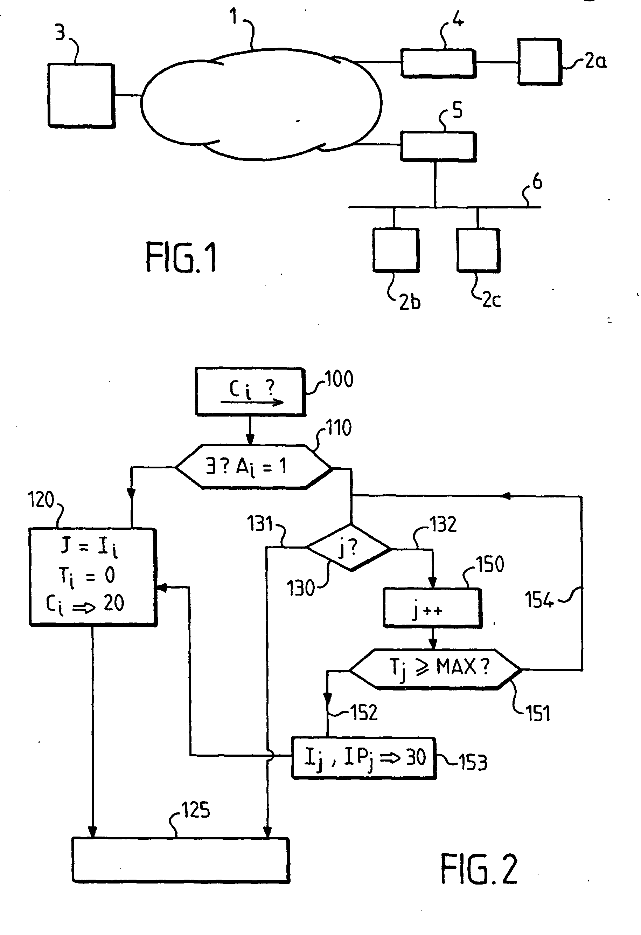

On a représenté sur la figure 1, à titre d'exemple, un réseau de télévision câblé 1 qui comporte des stations d'usager 2a, 2b, 2c... et une tête de réseau 3. Ce réseau est un réseau arborescent dont le noeud le plus haut est constitué par la tête de réseau. Les stations d'usager constituent les feuilles du réseau arborescent. Elles sont reliées à la tête de réseau par un ou plusieurs noeuds intermédiaires ayant une fonction de répéteur.

Chaque station d'usager est connectée au réseau câblé 1 par l'intermédiaire d'un modem dit modem câble. Le réseau câblé de la figure 1 comporte deux modems câble 4 et 5. Le modem 4 connecte la station d'usager 2a au réseau câblé 1. Le modem 5 est relié à un réseau local 6 de type Ethernet par exemple, afin de connecter toutes les stations d'usager du réseau local 6 au réseau câblé 1. Sur la figure 1, le réseau local 6 comporte deux stations d'usager 2b et 2c.

Le réseau 1 est un réseau ATM. Les principes généraux de l'ATM sont par exemple exposés au chapitre 3.2 de l'ouvrage de Martin de Prycker intitulé "Asynchronous Transfer Mode: solution for broadband ISDN" publié en 1991 par Ellis Horwood limited, en Grande Bretagne. Rappelons simplement ici que l'ATM est un mode de transfert orienté connexion, c'est-à-dire qu'une connexion entre la tête de réseau et la station d'usager doit être établie avant que la station ne puisse transmettre des cellules ATM sur le réseau. La procédure d'établissement d'une telle connexion est définie par la recommandation Q2931 de l'ATM forum. Elle s'effectue à la demande de la station d'usager qui souhaite se connecter au réseau, en utilisant une voie logique réservée à cet effet, et elle comporte notamment une étape d'allocation d'un identificateur VCI et/ou d'un identificateur VPI à la station d'usager, et une étape d'allocation des ressources nécessaires à la communication.

Les stations d'usager sont dotées d'un protocole de communication local. Dans l'exemple qui va être décrit, il s'agit du protocole IP (de l'anglais Internet Protocol). Cela signifie que les stations communiquent avec le modem auquel elles sont reliées en utilisant des paquets au format IP, et que les modems effectuent une opération d'encapsulation dans des cellules ATM des paquets IP qu'ils reçoivent en provenance des stations, pour les transmettre sur le réseau câblé. A l'inverse, ils effectuent une opération de désencapsulation des cellules ATM qu'ils reçoivent en provenance du réseau câblé 1 pour restituer les paquets IP à transmettre aux stations d'usager.

Une adresse IP est attribuée dynamiquement à chaque station lorsqu'elle est mise en marche. Dans le cas où un modem relie plusieurs stations d'usager au réseau câblé, deux méthodes d'adressage des stations d'usager sont envisageables: selon une première méthode, chaque station d'usager bénéficie d'une adresse IP unique sur l'ensemble du réseau câblé 1, selon une seconde méthode, on attribue aux stations d'usager une adresse IP locale qui n'est pas forcément unique sur l'ensemble du réseau. Avec cette seconde méthode, le modem assure une conversion locale d'adresse en remplaçant, à l'émission, l'adresse IP des paquets transmis par sa propre adresse IP. En réception, il retrouve l'adresse IP de la station destinataire à partir de l'identificateur de voie logique des cellules reçues.

Lorsque la première méthode est utilisée, on associe donc un unique identificateur VPI/VCI à une adresse IP qui est l'adresse IP de la station d'usager. Lorsqu'on utilise la seconde méthode, on associe à la même adresse IP qui est celle du modem autant d'identificateurs VPI/VCI qu'il a de stations connectées au réseau câblé sur le réseau local desservi par ledit modem.

On va maintenant décrire un exemple de procédé d'attribution d'un identificateur de connexion selon l'invention. Un tel procédé permet en particulier de ré-attribuer des identificateurs qui sont déjà alloués à des stations d'usagers, lorsque ces stations sont inactives. A cet effet, la tête de réseau est dotée de trois tables 10, 20 et 30 qui ont les fonctions suivantes:
- la table 10 est une table qui contient tous les identificateurs gérés par la tête de réseau et, pour chacun d'eux, un indicateur booléen A, de disponibilité.
- la table 20 est une table qui contient les indications relatives à chaque connexion Cᵢ en cours, en particulier l'adresse logique IPᵢ associée à la connexion Cᵢ (comme cela a été expliqué plus haut, il peut s'agir soit de l'adresse IP de la station d'usager i, soit de l'adresse IP du modem auquel elle est connectée), l'identificateur Iᵢ qui lui est attribué, et un compteur Tᵢ qui lui est affecté et qui est utilisé pour contrôler l'activité de la station i. Ce compteur indique le temps qui s'est écoulé depuis la dernière utilisation du réseau par la station i (le compteur Tᵢ est réinitialisé à chaque fois que la station émet ou reçoit des données). Lorsque le compteur dépasse un certain seuil MAX, la station est considérée comme inactive.
- la table 30 est une table qui contient l'adresse IP, et l'identificateur Iᵢ pour les stations d'usagers i dont les connexions Cᵢ ont été libérées.

Lorsque la tête de réseau ré-attribue l'identificateur Iᵢ d'une station inactive i à une station j qui fait une demande de connexion, elle inscrit la nouvelle connexion Cⱼ dans la table 20 des connexions en cours, et elle transfère la connexion Cᵢ dans la table 30 des connexions libérées.

Lorsqu'une station i a ainsi été déconnectée au profit d'une station j, le problème qui se pose est le suivant: la tête de réseau peut recevoir en provenance d'autres stations du réseau des cellules qui portent l'identificateur I, et qui sont destinées soit à la station j soit à la station i. La tête de réseau doit donc vérifier systématiquement, en parcourant la table 30, si l'identificateur de voie logique contenu dans les cellules qu'elle reçoit est un identificateur ré-attribué. Dans ce cas, elle vérifie en comparant les adresses IP si la station destinataire des paquets IP contenus dans les cellules reçues est celle qui est enregistrée dans la table 30 pour ledit identificateur. Dans le cas contraire, une nouvelle connexion doit être rétablie avec la station déconnectée afin de lui transmettre les paquets IP qui lui sont adressés: cette station est alors supprimée de la table 30, et la nouvelle connexion est enregistrée dans la table 20.

Par ailleurs, avant de pouvoir recommencer à transmettre des données, une station qui a déconnectée doit se reconnecter. Cette procédure de reconnexion est gérée de façon classique par la station, au niveau MAC (la couche MAC est la sous-couche d'accès physique du modèle OSI en 7 couches). Elle est donc transparente pour l'utilisateur de la station.

Un exemple de procédé d'attribution d'un identificateur de connexion selon l'invention est décrit sur la figure 2.
- A la case 100, la tête de réseau reçoit une demande d'établissement de connexion (il peut s'agir soit d'une demande d'établissement de connexion en provenance d'une station d'usager i, soit d'une demande d'établissement de connexion présentée par la tête de réseau elle-même pour rétablir une nouvelle connexion avec une station dont la connexion a été libérée). Elle recherche alors dans la table 10 un identificateur disponible (case 110).
- Si un identificateur disponible J est trouvé, elle effectue les opérations suivantes à la case 120: attribution de cet identificateur disponible à la station i (Iᵢ=J), initialisation d'un compteur Tᵢ, et enregistrement dans la table 20 des données relatives à la connexion Cᵢ (Iᵢ, IPᵢ, Tᵢ). Puis le fonctionnement se termine à la case 125.
- Sinon, la tête de réseau commence une procédure de recherche d'une éventuelle station inactive en parcourant la table 20. Pour cela elle effectue les opérations suivantes:

- à la case 130, elle vérifie si la table 20 a été entièrement parcourue. Si la table 20 a été entièrement parcourue (flèche 131) et si aucun identificateur n'a été trouvé, la procédure d'établissement de connexion se termine à la case 125 (la connexion n'est pas établie).
- Si la table 20 n'a pas été entièrement parcourue (flèche 132), la tête de réseau continue à la parcourir pour rechercher une connexion susceptible d'être libérée (case 150). Pour cela, pour chaque connexion Cⱼ enregistrée dans la table 20, elle teste la valeur du compteur Tⱼ (case 151).
- Si Tⱼ est supérieur à un seuil MAX prédéfini (flèche 152), la station Sⱼ est considérée comme étant inactive. La connexion Cⱼ est libérée: elle est supprimée de la table 20, et l'identificateur Iⱼ et l'adresse IPⱼ relatifs la station j sont enregistrés dans la table 30 (case 153). Puis l'identificateur Iⱼ est attribué à la station i et la nouvelle connexion est enregistrée dans la table 20 (case 120).
- Si Tⱼ est inférieur au seuil MAX (flèche 154), le fonctionnement reprend à la case 130.

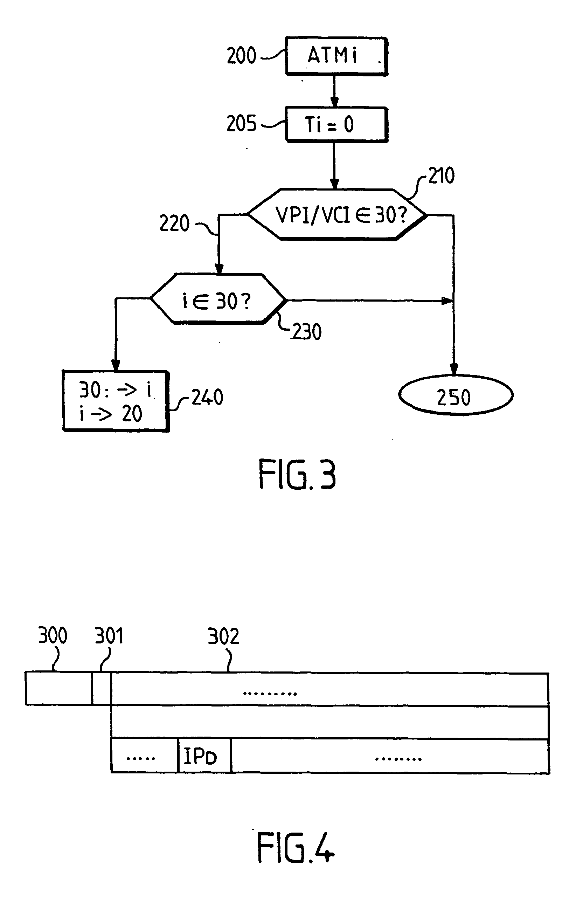

Sur la figure 3, on a représenté un exemple de procédé de gestion des connexions par la tête de réseau:
- à la case 200 la tête de réseau reçoit une cellule ATMᵢ à destination d'une station i.
- à la case 205, elle remet à zéro le compteur Tᵢ qui est associé à cette station i.
- à la case 210, elle extrait de cette cellule l'identificateur de voie logique VPI/VCI et vérifie en parcourant la table 30 s'il s'agit d'un identificateur ré-attribué.
- dans ce cas (flèche 220), elle doit vérifier si la station i est celle qui a été déconnectée. Cette vérification est effectuée à la case 230.
- dans le cas contraire (flèche 240), le fonctionnement se termine à la case 250.
- s'il résulte du test effectué à la case 230 que la station i est celle qui a été déconnectée, une nouvelle connexion est établie avec la station i à la case 240. Cette nouvelle connexion est enregistrée dans la table 20, et la station i est supprimée de la table 30.
- sinon, le fonctionnement se termine à la case 250.
Les opérations à réaliser à l'étape 230 vont maintenant être détaillées en se reportant à la figure 4. Sur la figure 4 on a notamment représenté une cellule ATM qui porte la référence 300. Cette cellule 300 comporte un entête 301 de 4 octets qui portent l'information nécessaire à l'acheminement de la cellule ATM sur le réseau (notamment l'identificateur de voie logique VPI/VCI), un champ 302 de protection de cet en-tête contre les erreurs de transmission qui contient 1 octet, et un champ d'informations 303 de 48 octets qui transporte les données d'usager et les éléments de protocole associés. Dans le cas où les cellules ATM sont utilisées pour véhiculer des paquets IP, chaque paquet IP est découpé pour être transmis dans plusieurs cellules ATM. Le premier morceau d'un paquet IP est contenu dans le champ d'information d'une première cellule ATM, les morceaux suivants sont contenus dans les champs d'information de cellules suivantes. La première cellule ATM contient donc l'en-tête du paquet IP. Cet en-tête contient notamment l'adresse source IP (notée IP_{S}) et l'adresse destination IP (notée IP_{D}) du paquet IP. L'adresse destination IP occupe les octets 17 à 20 de l'entête IP. A la case 230, on extrait donc de la cellule ATM les octets qui sont à l'emplacement de l'adresse destinataire IP_{D} (c'est-à-dire les octets 22 à 25 de la cellule ATM) et on les compare à l'adresse enregistrée dans la table 30.

On notera que l'invention n'est bien sûr pas limitée aux protocoles ATM et IP: elle est applicable à tout réseau fonctionnant en mode connecté et à tout protocole de communication locale. De plus, dans la pratique, les trois tables 10, 20 et 30 sont avantageusement stockées sous forme d'un unique enregistrement par identificateur, regroupant les informations suivantes: l'identificateur Iᵢ, son indicateur de disponibilité Aᵢ, l'adresse IP, et le compteur Tᵢ relatifs à la connexion Cᵢ, et un indicateur booléen Rᵢ indiquant si l'identificateur Iᵢ, a été ré-attribué.

## Revendications

1. Equipement pour un réseau de communication en mode connexion, qui comporte des stations d'usagers, ledit équipement étant doté :
- de moyens d'attribution, à une station d'usager, d'au moins un identificateur de connexion, en réponse à une demande de connexion de ladite station d'usager, et
- de moyens pour ré-attribuer l'identificateur de connexion des stations, dites stations inactives, qui n'ont pas utilisé le réseau depuis un certain temps,
**caractérisé en ce que** l'équipement comporte :
- des moyens de mémorisation des stations inactives dont l'identificateur de connexion a été ré-attribué,
- des moyens pour effectuer une vérification sur une cellule de transmission de données comportant un identificateur de connexion, afin de savoir si l'identificateur de connexion a été ré-attribué et, dans ce cas, extraire de ladite cellule une adresse identifiant une station d'usager destinataire afin de savoir si la station d'usager destinataire a été mémorisée en tant que station inactive dont l'identificateur de connexion a été ré-attribué,
- des moyens pour établir une nouvelle connexion avec la station d'usager destinataire dans le cas où celle-ci a été mémorisée en tant que station inactive dont l'identificateur de connexion a été ré-attribué

2. Equipement selon la revendication 1 comportant des moyens d'attribution d'un nouvel identificateur de connexion à une station déconnectée lorsque celle-ci recommence à utiliser le réseau.

3. Procédé de gestion des connexions dans un réseau de communication en mode connexion, qui comporte des stations d'usager, le procédé comprenant les étapes suivantes :
- attribuer au moins un identificateur de connexion à une station d'usager en réponse à une demande de connexion de ladite station d'usager,
- ré-attribuer l'identificateur de connexion des stations, dites stations inactives, qui n'ont pas utilisé le réseau depuis un certain temps,
**caractérisé en ce que** l'équipement de réseau comporte en outre :
- mémoriser des stations inactives dont l'identificateur de connexion a été ré-attribué,
- effectuer une vérification sur une cellule de transmission de données comportant un identificateur de connexion, afin de savoir si l'identificateur de connexion a été ré-attribué et, dans ce cas, extraire de ladite cellule une adresse identifiant une station d'usager destinataire afin de savoir si la station d'usager destinataire a été mémorisée en tant que station inactive dont l'identificateur de connexion a été ré-attribué,
- établir une nouvelle connexion avec la station d'usager destinataire dans le cas où celle-ci a été mémorisée en tant que station inactive dont l'identificateur de connexion a été ré-attribué.

4. Procédé selon la revendication 3 comportant une étape d'attribution d'un nouvel identificateur de connexion à une station déconnectée lorsque celle-ci recommence à utiliser le réseau.

5. Réseau de communication en mode connexion comportant des stations d'usager et au moins un équipement selon la revendication 1.

6. Réseau selon la revendication 5, **caractérisé en ce qu'**il s'agit d'un réseau câblé de télédistribution.

## Claims

1. Equipment for a communication network in the connection mode, which comprises user stations, said network equipment having:
- assignment means for assigning at least one connection identifier to a user station in response to a request for a connection from said user station, and
- re-assignment means for re-assigning the connection identifier of the stations called inactive stations that have not made use of the network for a certain period of time,
**characterized in that** the equipment comprises:
- storage means for storing the inactive stations whose connection identifier has been re-assigned,
- means for performing a verification of a data transmission cell comprising a connection identifier in order to know whether the connection identifier has been re-assigned and, **in that** case, to extract from said cell an address that identifies a destination user station in order to find out if the destination user station has been stored as an inactive station whose connection identifier has been re-assigned,
- means for setting up a new connection with the destination user station in the case where that station has been stored as an inactive station whose connection identifier has been re-assigned.

2. Equipment as claimed in claim 1, comprising assignment means for assigning a new connection identifier to a disconnected station when this station starts using the network again.

3. A method of managing connections in a communication network in the connection mode, the network comprising user stations, the method comprising the following steps:
- assigning at least one connection identifier to a user station in response to a request for a connection from said user station,
- re-assigning the connection identifier of the stations called inactive stations that have not made use of the network for a certain period of time,
**characterized in that** the network equipment further includes:
- storing the inactive stations whose connection identifier has been re-assigned,
- performing a verification of a data transmission cell comprising a connection identifier in order to know whether the connection identifier has been re-assigned and, **in that** case, to extract from said cell an address that identifies a destination user station in order to find out if the destination user station has been stored as an inactive station whose connection identifier has been re-assigned,
- setting up a new connection with the destination user station in the case where that station has been stored as an inactive station whose connection identifier has been re-assigned.

4. A method as claimed in claim 3, comprising an assigment step for assigning a new connection identifier to a disconnected station when the latter station starts using the network again.

5. A communication network in the connection mode comprising user stations and at least equipment as claimed in caim 1.

6. A network as claimed in claim 5, **characterized in that** we are facing a cabled distribution network.

## Patentansprüche

1. Einrichtung für ein verbindungsorientiertes Kommunikationsnetz mit Teilnehmerstationen, wobei die genannte Einrichtung Folgendes umfasst:
- Mittel zum Zuweisen von mindestens einer Verbindungskennung zu einer Teilnehmerstation als Antwort auf eine Verbindungsanfrage der genannten Teilnehmerstation und
- Mittel zum erneuten Zuweisen der Verbindungskennung der so genannten inaktiven Stationen, die das Netz eine gewisse Zeit lang nicht genutzt haben,
**dadurch gekennzeichnet, dass** die Einrichtung Folgendes umfasst:
- Mittel zum Speichern der inaktiven Stationen, deren Verbindungskennung erneut zugewiesen wurde,
- Mittel zum Durchführen einer Überprüfung einer Datenübertragungszelle, die eine Verbindungskennung enthält, um festzustellen, ob die Verbindungskennung erneut zugewiesen wurde, und in diesem Fall Extrahieren aus der genannten Zelle einer Adresse, die eine Zielteilnehmerstation identifiziert, um festzustellen, ob die Zielteilnehmerstation als inaktive Station gespeichert wurde, deren Verbindungskennung erneut zugewiesen wurde,
- Mittel zum Herstellen einer neuen Verbindung mit der Zielteilnehmerstation für den Fall, dass diese als inaktive Station gespeichert wurde, deren Verbindungskennung erneut zugewiesen wurde.

2. Einrichtung nach Anspruch 1 mit Mitteln zum Zuweisen einer neuen Verbindungskennung zu einer abgekoppelten Station, wenn diese beginnt, das Netz wieder zu nutzen.

3. Verfahren des Verwaltens der Verbindungen in einem verbindungsorientierten Netz mit Teilnehmerstationen, wobei das Verfahren folgende Schritte umfasst:
- Zuweisen mindestens einer Verbindungskennung zu einer Teilnehmerstation als Antwort auf eine Verbindungsanfrage der genannten Teilnehmerstation,
- erneutes Zuweisen der Verbindungskennung der so genannten inaktiven Stationen, die das Netz eine gewisse Zeit lang nicht genutzt haben,
**dadurch gekennzeichnet, dass** das Verfahren ferner Folgendes umfasst:
- Speichern der inaktiven Stationen, deren Verbindungskennung erneut zugewiesen wurde,
- Durchführen einer Überprüfung einer Datenübertragungszelle, die eine Verbindungskennung enthält, um festzustellen, ob die Verbindungskennung erneut zugewiesen wurde, und in diesem Fall Extrahieren aus der genannten Zelle einer Adresse, die eine Zielteilnehmerstation identifiziert, um festzustellen, ob die Zielteilnehmerstation als inaktive Station gespeichert wurde, deren Verbindungskennung erneut zugewiesen wurde,
- Herstellen einer neuen Verbindung mit der Zielteilnehmerstation für den Fall, dass diese als inaktive Station gespeichert wurde, deren Verbindungskennung erneut zugewiesen wurde.

4. Verfahren nach Anspruch 3, das einen Schritt der Zuweisung einer neuen Verbindungskennung zu einer abgekoppelten Station umfasst, wenn diese beginnt, das Netz wieder zu nutzen.

5. Verbindungsorientiertes Kommunikationsnetz mit Teilnehmerstationen und mindestens einer Einrichtung nach Anspruch 1.

6. Netz nach Anspruch 5, **dadurch gekennzeichnet, dass** es sich um ein Kabelfernsehnetz handelt.
